# EUROPÄISCHE PATENTSCHRIFT

(11) **EP 3 354 754 B1**
(45) Veröffentlichungstag und Bekanntmachung des Hinweises auf die Patenterteilung: **19.06.2019**
(21) Anmeldenummer: 18152697.1
(22) Anmeldetag: 22.01.2018
(51) Int. Cl.: C14B 1/20, C14B 17/02, C14B 1/04, C14B 1/06, B26D 1/14

(54) **MESSER SOWIE VERFAHREN ZU DESSEN HERSTELLUNG**
KNIFE AND METHOD FOR THE PRODUCTION OF SAME
COUTEAU AINSI QUE SON PROCÉDÉ DE FABRICATION

(30) Priorität: 31.01.2017 DE 102017101822
(43) Veröffentlichungstag der Anmeldung: 01.08.2018
(73) Patentinhaber: Heusch GmbH & Co. KG, 52078 Aachen (DE)
(72) Erfinder: SPANIOL, Hanns Peter, 81679 München (DE)
(74) Vertreter: Prüfer & Partner mbB Patentanwälte · Rechtsanwälte

(56) Entgegenhaltungen:
- CN-Y- 2 880 843
- DE-C- 340 760
- DE-U- 7 337 844
- FR-A1- 2 620 132
- US-A- 526 387

## Beschreibung

### Einleitung

Die vorliegende Erfindung betrifft ein Messer, insbesondere ein Falzmesser zur Bearbeitung von Lederwaren, umfassend einen langgestreckten, flachen Messerschenkel, der entlang seiner Längsachse wendelförmig bzw. helixförmig um eine Mittelachse ausgebildet ist, sodass die Längsachse des Messers wendelförmig verläuft, wobei der Messerschenkel an einem oberen, der Mittelachse abgewandten Ende einen Schneidabschnitt aufweist, der an seinem oberen Ende eine Schneidkante umfasst, wobei das Messer zumindest in seinem Schneidabschnitt eine gegenüber einem glatten Verlauf verlängerte Oberflächenstruktur aufweist, die - entlang der Längsachse des Messers betrachtet - regelmäßig alternierend Hochpunkte und Tiefpunkte aufweist, wobei sich Berglinien und Tallinien, die mit den Hochpunkten und Tiefpunkten der Oberflächenstruktur jeweils korrespondieren, ausgehend von der Schneidkante in Richtung der Mittelachse des Messers erstrecken.

Weiterhin betrifft die vorliegende Anmeldung eine Schneideinrichtung, insbesondere zum Falzen oder Entfleischen einer Tierhaut, umfassend mindestens einen langgestreckten Zylinderkörper, der um seine Längsachse in eine Rotationsrichtung rotierbar gelagert ist, sowie eine Mehrzahl von gewendelten Messern, deren Mittelachse mit der Längsachse des Zylinderkörpers zusammenfällt, wobei die Messer jeweils in einem äußeren Mantelbereich des Zylinderkörpers in Kraft übertragender Weise an dem Zylinderkörper angeordnet sind, wobei mindestens zwei Messer gegenläufig gewendelt an dem Zylinderkörper angeordnet sind und in einem Mittelbereich des Zylinderkörpers aneinanderstoßen, sodass im Zuge einer Rotation des Zylinderkörpers um dessen Längsachse mittels des einen Messers Material eines zu bearbeitenden Gegenstandes in Richtung eines seitlichen Endbereichs des Zylinderkörpers und mittels des anderen Messers Material in Richtung des gegenüberliegenden seitlichen Endbereichs des Zylinderkörpers transportierbar ist, wobei sich die Messer jeweils ausgehend von einer Stoßstelle, an der sie an ein gegenläufig gewendeltes Messer stoßen, bis in den jeweils zugehörigen seitlichen Endbereich des Zylinderkörpers erstrecken.

Abschließend betrifft die vorliegende Anmeldung ein Verfahren zur Herstellung eines Messers, aufweisend den folgenden Verfahrensschritt:
a) Ein langgestreckter, flacher Messerschenkel wird ausgehend von einem ebenen Zustand, in dem er vollflächig auf einen ebenen Untergrund auflegbar ist, unter Verwendung einer Walzvorrichtung gewalzt, wobei die Walzvorrichtung einen zumindest über einen Teil ihrer Breite betrachtet zulaufenden Walzspalt aufweist, sodass der Messerschenkel im Zuge des Walzens in einen wendelförmigen Zustand überführt wird, in dem eine Längsachse des Messerschenkels wendelförmig um eine Mittelachse verläuft.

Ein beschriebenes Messer kann insbesondere von einem flachen Stahlband gebildet sein, dessen Höhe dessen Dicke deutlich übersteigt. Ein solches Stahlband hat einen rechteckigen Querschnitt, wobei eine Breite des Querschnitts deutlich geringer ist als dessen Höhe. Insbesondere kann die Breite des Querschnitts, die der Dicke des Stahlbandes entspricht im Bereich weniger mm liegen, während die Höhe des Querschnitts im Bereich mehrere cm liegen kann. Besonders vorteilhaft für ein derartiges Messer ist die Verwendung von gehärtetem Stahl. Diese sind im Stand der Technik weidlich bekannt.

Unter der "Oberflächenstruktur" wird im Sinne der vorliegenden Anmeldung die Struktur der Oberfläche des Messerschenkels verstanden, wobei definitionsgemäß eine vollständig ebene Oberfläche keine Oberflächenstruktur aufweist. Typische Ausprägungen einer Oberflächenstruktur können beispielsweise eine Wellenform, eine Zackenform oder eine sonstige regelmäßige oder unregelmäßige Form sein. Eine solche Oberflächenstruktur zeichnet sich insbesondere dadurch aus, dass sie relativ zu der jeweiligen Fläche betrachtet, in der die Oberflächenstruktur vorliegt, sowohl Hochpunkte als auch Tiefpunkte aufweist.

Unter "Berglinien" und "Tallinien" werden im Sinne der vorliegenden Anmeldung Linien, die sich entlang einer zusammengehörigen Menge von Hochpunkten bzw. Tiefpunkten einer regelmäßigen Oberflächenstruktur erstrecken. Am Beispiel einer Oberflächenstruktur, die zackenförmig ausgebildet ist, weist jeder der Zacken entlang einer Berglinie eine Summe an Hochpunkten und entlang einer Tallinie eine Summe an Tiefpunkten auf. Zwischen den Berglinien und Tallinien befinden sich ebene, schräg ausgerichtete Bereiche. Am Beispiel einer Oberflächenstruktur betrachtet, die wellenförmig ausgebildet ist, liegen auch derartige Berglinien und Tallinien vor. Der Bereich zwischen den Berglinien und den Tallinien verläuft hier jedoch beispielsweise geschwungen mit veränderlicher Krümmung und nicht eben. Ebenfalls ist es denkbar, dass eine Oberflächenstruktur zusammengesetzt regelmäßig ist, das heißt zum Beispiel aus einer Aneinanderreihung von horizontalen Ebenen und darin in gewissen Abständen voneinander eingelassenen Zacken besteht. Bei diesem Beispiel existieren zwar eindeutige Tallinien, nämlich die unteren Enden der Zacken, jedoch keine eindeutigen Berglinien, da die "Berge" als Ebene ausgeführt sind. In diesem und in vergleichbaren Fällen ist der Begriff der "Berglinie" bzw. der "Tallinie" abstrahiert von der mathematischen Definition einer Linie als zweidimensionaler Bereich zu verstehen, der sämtliche zusammengehörigen Hoch- bzw. Tiefpunkte umfasst.

Unter der "Mittelachse" des Messers wird im Sinne der vorliegenden Anmeldung eine Achse verstanden, die selbst nicht Bestandteil des Messers ist, sondern um die herum das Messer sich lediglich wendelförmig erstreckt. Im Unterschied dazu ist die Längsachse des Messers auch Bestandteil desselben, wobei die Längsachse entsprechend der Wendelform des Messerschenkels gleichermaßen eine Wendelform beschreibt.

### Stand der Technik

Ein Messer der eingangs beschriebenen Art ist im Stand der Technik bereits bekannt. Dasselbe gilt für die Schneideinrichtung. Hierzu wird insbesondere auf das Deutsche Gebrauchsmuster DE 73 37 844 U1 verwiesen, das Falzmesser mit einer Oberflächenstruktur beschreibt. Die Oberflächenstruktur ist in einem Schneidabschnitt des dort gezeigten Messers angeordnet, wobei verschiedene geometrische Formen der Oberflächenstruktur offenbart sind. Das beschriebene Messer wird als Falzmesser zum Falzen von Tierhäuten verwendet.

Das bekannte Messer hat ebenso wie alle übrigen bekannten Messer den wesentlichen Nachteil, dass im Zuge der Bearbeitung einer jeweiligen Tierhaut erhebliche Schnittkräfte in die Tierhaut eingebracht werden. Diese Schnittkräfte sind dadurch bedingt, dass die Messer mit ihrer Schneidkante mit der Tierhaut in einen reibenden Kontakt treten, wobei wunschgemäß ein abzutragendes Material von der Tierhaut "abgeschnitten" wird. Hierbei werden als unerwünschte Nebenwirkung auch sich in der Ebene der Tierhaut erstreckende Reibkräfte in die Tierhaut eingetragen. Dies hat den Effekt, dass die Tierhaut zumindest in einem gewissen Maße in ihrer Ebene gestreckt wird.

Dies kann sodann zum Beispiel zur Folge haben, dass die Dicke der Tierhaut zumindest lokal abnimmt, da die Tierhaut eine Längendehnung erfährt, die mit einer entsprechenden Reduktion ihrer Dicke einhergeht. Zudem ist die Tierhaut in aller Regel als gewachsenes Produkt nicht vollständig homogen über seine gesamte Fläche, sondern es liegen strukturell stärkere und strukturell schwächere Bereiche vor. Diese Bereiche reagieren unterschiedlich sensibel auf die eingetragenen Längskräfte, wodurch es zu lokalen Beeinträchtigungen und sogar Beschädigungen im Zuge der Bearbeitung kommen kann. Besonders erwähnenswert ist dieser Effekt in einem Mittelbereich einer jeweiligen Schneideinrichtung, in dem gegenläufig wendelförmig ausgebildete Messer aneinander stoßen und von dem ausgehend das abgetragene Material zu den sich gegenüberliegenden Endbereich des Zylinderkörpers abtransportiert wird. In diesem Mittelbereich stoßen die ziehenden Kräfte der einen Seite der Schneideinrichtung mit den ziehenden Kräften der anderen Seite der Schneideinrichtung gewissermaßen zusammen, wodurch die in der Tierhaut vorliegende Zugbelastung in dem Mittelbereich der Schneideinrichtung besonders hoch ist. Es ist sehr typisch, dass eine jeweilige Tierhaut, die den Mittelbereich der Schneideinrichtung durchfahren hat, entlang ihrer Längsachse aufgetrennt und der zugehörige Bereich herausgeschnitten werden müssen, da aufgrund der eingetragenen Längskräfte die beschriebenen Beschädigungen einen nicht akzeptablen Umfang angenommen haben.

### Aufgabe

Der vorliegenden Erfindung liegt mithin die Aufgabe zugrunde, sowohl ein Messer als auch eine Schneideinrichtung bereitzustellen, mittels derer eine vergleichsweise schonende Bearbeitung von Tierhäuten möglich ist.

### Lösung

Die zugrunde liegende Aufgabe wird ausgehend von dem Messer der eingangs beschriebenen Art erfindungsgemäß dadurch gelöst, dass die Berglinien und Tallinien bogenförmig verlaufen, wobei die Berglinien und die Tallinien jeweils über ihre Länge einen veränderlichen Radius aufweisen.

Der "bogenförmige Verlauf" schlägt sich erfindungsgemäß in einer Bogenform in der Messerschenkelebene nieder. Das heißt, dass die Berglinien und Tallinien in einer lokalen Ansicht des Messerschenkels bogenförmig erscheinen. Nicht gemeint ist eine Wölbung der Berglinien und Tallinien aus der Messerschenkelebene heraus. Unter der "lokalen Ansicht des Messerschenkels" wird hierbei gewissermaßen eine ebene Ansicht auf die Brustfläche des Messers verstanden, wobei sich aufgrund der Wendelform des Messers versteht, dass diese Ansicht in Abhängigkeit einer jeweils betrachteten Stelle lediglich lokal als "eben" bezeichnet werden kann. Eine Blickrichtung bei der beschriebenen Ansicht ist lokal senkrecht zu der Brustfläche des Messerschenkels ausgerichtet.

Die "Länge" einer Berglinie bzw. Tallinie erstreckt sich von einem Ende bis zu dem jeweils gegenüberliegenden Ende. Da die Berglinien und Tallinien erfindungsgemäß bogenförmig verlaufen, handelt es sich bei der Länge um die gestreckte Länge.

Unter einem "veränderlichen Radius" wird im Sinne der vorliegenden Anmeldung ein Radius verstanden, der über die Länge der jeweiligen Berg- bzw. Tallinie hinweg zumindest abschnittsweise nicht konstant ist. Insbesondere ist es denkbar, dass sich die Radien der Berglinien und Tallinien der Oberflächenstruktur nichtlinear verändern.

Im Vergleich zu der hier erfindungsgemäß bogenförmigen Ausgestaltung der Tallinien und Berglinien sind letztere gemäß dem oben zitierten Stand der Technik gerade ausgebildet. Die erfindungsgemäße Ausgestaltung führt gegenüber dieser geraden Ausrichtung der Berglinien und Tallinien zu vielen Vorteilen. Insbesondere erlaubt sie die eine parallele Ausrichtung der Berglinien und Tallinien zueinander. Eine solche ist gemäß dem Stand der Technik konstruktiv nicht möglich, da sich dort die Berglinien und Tallinien radial von der Mittelachse des wendelförmig geformten Messers weg erstrecken. Dies führt geometrisch zwingend dazu, dass sich die Berglinien bzw. Tallinien ausgehend von einer der Mittelachse zugewandten Stelle hin zu einer der Mittelachse abgewandten Stelle voneinander weg bewegen bzw. sich ein Bereich, der sich zwischen einer Berglinie und einer jeweils benachbarten Tallinie erstreckt, aufweitet. Dieser Effekt kann mittels der Bogenform der Berglinien und Tallinien unterdrückt werden, sodass die Berglinien und Tallinien letztlich zumindest im Wesentlichen parallel zueinander vorliegen, wobei Parallelität im Sinne der vorliegenden Anmeldung immer dann gegeben ist, wenn sich der kürzeste Abstand zwischen einer jeweiligen Berglinie und einer benachbarten Tallinie über die Länge der Linien nicht verändert.

Es hat sich überraschend gezeigt, dass diese Parallelität in der Oberflächenstruktur den technischen Effekt zur Folge hat, dass sich der Energieeintrag in die jeweilige Tierhaut im Rahmen der mechanischen Bearbeitung aufgrund der gleichmäßig wirkenden Oberflächenstruktur des Messers über den Schnittbereich verteilt. Dies hat wiederum zur Folge, dass die bearbeitete Tierhaut im Mittelbereich des Zylinderkörpers erheblich weniger belastet wird, als dies im Stand der Technik der Fall ist. Mit anderen Worten ist der Betrag der Längskräfte, der im Zuge der Bearbeitung mittels des erfindungsgemäßen Messers innerhalb der Tierhaut wirkt, mittels der bogenförmig ausgestalteten Form der Berglinien und Tallinien der Oberflächenstruktur erheblich reduziert. Im Ergebnis können unter Verwendung des erfindungsgemäßen Messers die bearbeiteten Tierhäute vollständig genutzt werden und müssen nicht entlang ihrer Mittelachse getrennt werden. Die wirtschaftliche Verwertbarkeit von Tierhäuten kann hierdurch erheblich gesteigert werden.

Weiterhin hat der geringere Eintrag von Zugkräften in die Tierhaut den Vorteil, dass die Qualität der Bearbeitung gegenüber dem Stand der Technik gesteigert werden kann. Wie vorstehend bereits beschrieben, kommt es aufgrund der Längskräfte innerhalb der Tierhaut prinzipbedingt dazu, dass die jeweilige Tierhaut zumindest lokal gelängt und dadurch entsprechend in ihrer Dicke reduziert wird. Ein jeweiliges Messer, dass die Tierhaut an einer bestimmten Stelle überstreicht, kann aufgrund der Reduzierung der Dicke schließlich eine Stelle, die eigentlich mittels des Messers abgetragen werden soll, nicht mehr erreichen. Nach der Bearbeitung der Tierhaut zieht sich letztere in Abwesenheit jeglicher Längskräfte aufgrund ihrer elastischen Eigenschaften wieder zusammen, sodass die Dicke an der besagten Stelle entsprechend wieder ansteigt. Aufgrund der Unregelmäßigkeit der verschiedenen Bereiche kommt es somit im Ergebnis bei der fertig bearbeiteten Tierhaut zu einer Oberflächenstruktur derselben, die vergleichsweise unregelmäßig ist. Beispielsweise kann eine Dicke der Tierhaut, die auf 1,0 mm eingestellt werden soll, im Bereich zwischen 0,9 mm und 1,1 mm schwanken. Es versteht sich, dass ein möglichst geringer Eintrag von Längskräften in die Tierhaut, wie er mittels des erfindungsgemäßen Messers möglich ist, vorteilhaft wirkt, da entsprechende Längskräfte und damit einhergehende Dickenreduzierungen nicht in demselben Maße auftreten wie im Stand der Technik. Die erfindungsgemäßen Messer können daher das überschüssige Material gleichmäßiger abtragen, sodass die Tierhaut im Ergebnis folglich über ihre Fläche hinweg eine geringere Abweichung von den jeweilig gewünschten Dickenmaß aufweist.

Abschließend hat die zumindest weitestgehende Parallelität der Berglinien und Tallinien den weiteren Vorteil, dass sich die Geometrie der Oberflächenstruktur im Zuge eines Nachschliffs des Messers, wie er im Betrieb einer zugehörigen Schneideinrichtung fortwährend zur Erhaltung der Schärfe des Messers vorgenommen wird, nicht ändert. Folglich ist die Bearbeitungsqualität, die mittels des erfindungsgemäßen Messers erzielt wird, unabhängig von dessen Verwendungsdauer. Mit anderen Worten liefert das erfindungsgemäße Messer kurz vor dessen Auswechslung noch dieselben, qualitativ hochwertigen Ergebnisse, die es bereits im Neuzustand lieferte.

Für die Erzeugung der Parallelität der Berglinien und Tallinien der Oberflächenstruktur ist es zwingend, dass die Radien der jeweiligen Linien über deren Länge veränderlich sind. Dabei ist es besonders von Vorteil, wenn die Radien der Berglinien und Tallinien sich über die Länge der letzteren jeweils kontinuierlich verändern. Vorzugsweise reduziert sich der Radius einer jeweiligen Berglinie bzw. Tallinie ausgehend von einem Anfangsradius an einem der Mittelachse zugewandten Ende der Berglinie bzw. Tallinie hin zu einem demgegenüber geringeren Endradius an einem der Mittelachse abgewandten Ende der Berglinie bzw. Tallinie. Mit anderen Worten sind die Berglinien vorzugsweise an deren innenliegendem Anfang weniger stark gekrümmt als an deren außenliegendem Ende.

In einer weiterhin vorteilhaften Ausgestaltung des erfindungsgemäßen Messers ist die Oberflächenstruktur wellenförmig oder zackenförmig ausgebildet. Diese Geometrien sind regelmäßig und können entsprechend vergleichsweise leicht in den Messerschenkel eingebracht werden. Ferner führt die Gleichmäßigkeit der so ausgebildeten Oberflächenstruktur zu einem Energieeintrag in die jeweilige Tierhaut, der zumindest im Wesentlichen frei von Belastungsspitzen ist.

Das erfindungsgemäße Messer weiter ausgestaltend kann es besonders von Vorteil sein, wenn ein Strukturbereich, über den sich die Oberflächenstruktur ausgehend von der Schneidkante eines unbenutzten Messers entlang des Messerschenkels in die dem Schneidabschnitt abgewandte Richtung erstreckt, mindestens 20 % einer Höhe des Messerschenkels beträgt. Vorteilhafterweise erstreckt sich der Strukturbereich über mindestens 40 %, weiter vorzugsweise mindestens 50 %, der Höhe des Messerschenkels. Auf diese Weise kann das Messer mit einer hohen Standzeit versehen werden, da ein Materialabtrag des Messers, beispielsweise im Zuge von dessen Nachschliff während des Betriebs, nicht automatisch zu einem vollständigen Abtrag der Oberflächenstruktur des Messers führt. Stattdessen hält das Messer gewissermaßen eine bestimmte "Menge" der Oberflächenstruktur vor. Grundsätzlich ist es denkbar, die Oberflächenstruktur soweit an dem Messerschenkel "herunterzuziehen", dass nur noch ein unterer Einspannabschnitt verbleibt, mittels dessen das Messer in einen zugehörigen Zylinderkörper einer Schneideinrichtung eingespannt werden kann.

Ausgehend von der Schneideinrichtung der eingangs beschriebenen Art wird die zugrunde liegende Aufgabe ferner dadurch gelöst, dass die Berglinien und Tallinien gegenläufig gewendelter Messer - global betrachtet - gleichläufig gebogen sind. Besonders von Vorteil ist eine Ausgestaltung, bei der die Berglinien und Tallinien der gegenläufig gewendelten Messer jeweils derart gebogen sind, dass die der Mittelachse abgewandten Enden der Berglinien und Tallinien deren jeweils zugehörigen, der Mittelachse zugwandten Enden in Rotationsrichtung des Zylinderkörpers betrachtet nachlaufen (Ausrichtung der Bögen "in Schneidrichtung"). Eine umgekehrte Ausrichtung, in der die "äußeren" Enden den "inneren" Enden vorgehen, ist selbstverständlich ebenso denkbar (Ausrichtung der Bögen "entgegen der Schneidrichtung").

Der bestimmten Ausrichtung der Bögen der Oberflächenstruktur liegt die Überlegung zugrunde, dass die gebogene Form einen ziehenden oder einen drückenden Schnitt bedingen kann, je nach Ausrichtung der Bögen. Ein ziehender Schnitt erfolgt bei Ausrichtung der Bögen in Schneidrichtung und umgekehrt ein drückender Schnitt bei Ausrichtung der Bögen entgegen der Schneidrichtung. Die "Schneidrichtung" beschreibt hierbei die Bewegungsrichtung eines jeweiligen Messers durch das zu schneidende Material. Bei der erfindungsgemäßen sowie bei den bekannten Schneidvorrichtungen versteht es sich, dass die wendelförmigen Messer aufgrund der Rotation des Zylinderkörpers im Zuge des Kontakts mit dem zu schneidenden Gegenstand, insbesondere einer Tierhaut, durch das Material gezogen werden, während gleichzeitig aufgrund der Wendelform der Messer ein seitlicher Abtrag des geschnittenen Materials stattfindet.

Für einen hochqualitativen Schnitt ist ein ziehender Schnitt besonders von Vorteil, da er die Schärfe der Schneidkante gewissermaßen aufgrund der Bewegung als solche effektiv steigert. Entsprechend ist die vorstehend beschriebene "nachlaufende" Form, die einen ziehenden Schnitt unterstützt, besonders von Vorteil.

Ausgehend von dem Verfahren der eingangs beschriebenen Art kann das erfindungsgemäße Messer besonders einfach mittels des folgenden Verfahrensschritt erfindungsgemäß hergestellt werden:
b) Mittels einer Walzvorrichtung wird der Messerschenkel auf mindestens einer Seite zumindest in einem Strukturbereich geprägt, sodass er eine gegenüber einem glatten Verlauf verlängerte Oberflächenstruktur aufweist.

Diese Art der Fertigung des erfindungsgemäßen Messers ist besonders kostengünstig und zügig durchführbar, da die Einbringung der Oberflächenstruktur kontinuierlich erfolgen kann. Dies gilt insbesondere gegenüber einem diskontinuierlichen Verfahren, bei dem einzelne Täler oder Zacken beispielsweise in den jeweiligen Messerschenkel eingeschlagen werden.

In einer vorteilhaften Ausgestaltung des erfindungsgemäßen Verfahrens wird die Einbringung der Wendelform des Messers in zwei Schritten durchgeführt, wobei die Überführung des Messers von seinem ebenen Zustand in einen ringförmigen Zustand gleichzeitig mit der Einprägung der Oberflächenstruktur in den Messerschenkel in einem einzigen Arbeitsgang vorgenommen wird. Dies ist besonders einfach möglich, in dem eine jeweilige Walze, die zur Erzeugung der Ringform des Messers verwendet wird, eine entsprechende Oberflächenstruktur aufweist, die gewissermaßen das Negativ zu der gewünschten Oberflächenstruktur des Messers darstellt. Im Zuge des weiteren Vorgangs wird diese Oberflächenstruktur schließlich unmittelbar in den Messerschenkel eingebracht. Im Ergebnis kann somit ein flacher Messerstahl ausgehend von seiner lang gestreckten, geraden Form mittels eines einzigen Arbeitsgang sowohl in seine Ringform überführt als auch mit der gewünschten Oberflächenstruktur geprägt werden. Die Erzeugung der Wendelform schließt sich sodann an. Sie wird durchgeführt, in dem der erzeugte Ring gewissermaßen in Richtung einer Mittelachse auseinandergezogen wird.

### Ausführungsbeispiele

Das erfindungsgemäße Messer sowie das erfindungsgemäße Verfahren werden nachstehend anhand eines Ausführungsbeispiels, das in den Figuren dargestellt ist, näher erläutert. Es zeigt:
- Fig. 1:: Ein Detail eines Abschnitts eines erfindungsgemäßen Messers,
- Fig. 2:: Eine erfindungsgemäße Schneideinrichtung, die mit mehreren Messern gemäß Figur 1 ausgestattet ist,
- Fig. 3:: Ein Detail der Schneideinrichtung gemäß Figur 2,
- Fig. 4:: Eine Ansicht einer strukturierten Oberfläche einer Walze einer Walzvorrichtung zur Herstellung eines erfindungsgemäßen Messers und
- Fig. 5:: ein Detail der strukturierten Oberfläche der Walze gemäß Figur 4.

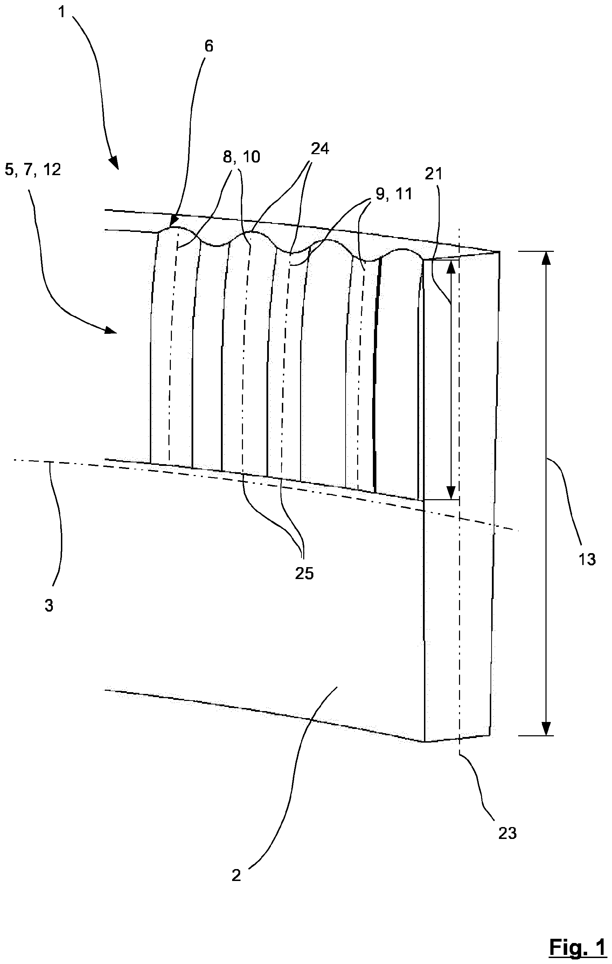

Das Ausführungsbeispiel, das in den **Figuren 1 bis 3** gezeigt ist, umfasst ein erfindungsgemäßes, wendelförmiges bzw. helixförmiges Messer **1,** das auf einer erfindungsgemäßen Schneidvorrichtung **14** angeordnet ist. Genau genommen umfasst die Schneideinrichtung **14** eine Mehrzahl von erfindungsgemäßen Messern **1.** Das Messer **1** ist um eine Mittelachse **4** gewendelt ausgeführt.

Das Messer **1** selbst, dessen wesentliche Teile sich besonders gut anhand von **Figur 1** ergeben, umfasst einen Messerschenkel **2.** Dieser weist an einem oberen, der Mittelachse **4** abgewandten Ende einen Schneidabschnitt **5** auf, der eine Schneidkante **6** beinhaltet. Die Schneidkante **6** erstreckt sich entlang eines oberen Endes des Messerschenkels **2,** sodass das Messer **1** im Zuge seiner Verwendung entlang der Schneidkante **6** mit einer zu bearbeitenden Tierhaut in Kontakt treten kann. Der Messerschenkel **2** weist des Weiteren einen Strukturbereich **12** auf, der in dem gezeigten Beispiel mit dem Schneidabschnitt **5** zusammenfällt. In dem Strukturbereich **12** weist der Messerschenkel **2** eine Oberflächenstruktur **7** auf. Diese ist hier von einer Wellenform gebildet, wobei alternierend Hochpunkte **8** sowie Tiefpunkte **9,** die sich jeweils entlang von Berglinien **10** bzw. Tallinien **11** erstrecken, entlang einer Längsachse **3** des Messers **1** angeordnet sind. Mit anderen Worten führt eine parallel zu der Längsachse **3** in dem Strukturbereich **12** des Messers **1** gelegte Oberflächenlinie alternierend durch Wellentäler hin zu Wellenbergen usw. Das Detail gemäß **Figur 1** zeigt die Oberflächenstruktur **7** exemplarisch lediglich in einem Teilbereich. Gleichwohl versteht es sich, dass das Messer **1** entlang seiner gesamten Länge mit der Oberflächenstruktur **7** versehen ist.

Der Strukturbereich **12** weist eine Höhe **21** auf, innerhalb derer sich der Strukturbereich **12** ausgehend von der oberen Schneidkante **6** in eine Richtung parallel zu einer Hochachse **23** des Messers **1** erstreckt. Die Höhe **21** des Strukturbereichs **12** beträgt in dem gezeigten Beispiel etwa 50 % einer gesamten Höhe **13** des Messerschenkels **2.**

Die Berglinien **10** und Tallinien **11** der Oberflächenstruktur 7 sind erfindungsgemäß gebogen ausgeführt. Auf diese Weise ist es ermöglicht, dass die Berglinien **10** und Tallinien **11** zumindest im Wesentlichen parallel zueinander verlaufen. Die gekrümmte Form der Oberflächenstruktur **7** ist in **Figur 1** besonders gut erkennbar. Der parallele Verlauf der Berglinien **10** und der Tallinien **11** führt gemäß obiger Beschreibung zu einer Verbesserung der Schnittqualität sowie zu einem Schutz der jeweils bearbeiteten Tierhaut vor Beschädigungen.

Die Berglinien **10** und Tallinien **11** weisen jeweils über ihre Längen einen veränderlichen Radius auf, wobei sich der Radius ausgehend von einem unteren Ende **25** einer jeweiligen Linie hin zu einem zugehörigen oberen Ende **24** derselben Linie in dem gezeigten Beispiel kontinuierlich verringert und mithin umgekehrt sich die Krümmung vergrößert. Die veränderliche Ausgestaltung der Radien der Berglinien **10** und Tallinien **11** ist grundsätzlich zwingend, um eine parallele Ausrichtung derselben erzeugen zu können.

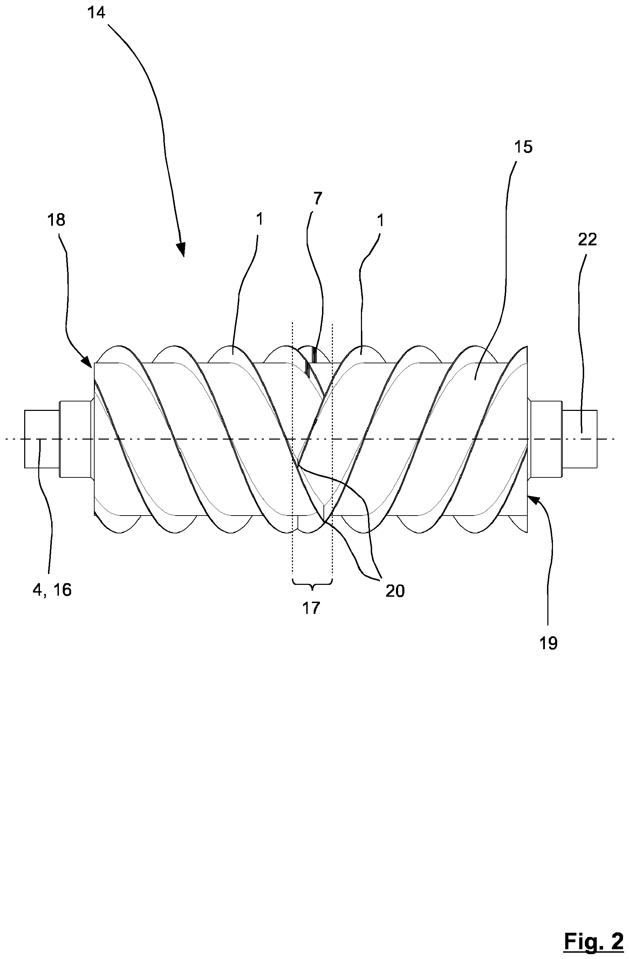

Das erfindungsgemäße Messer **1** gemäß **Figur 1** kann insbesondere auf einer erfindungsgemäßen Schneidvorrichtung **14** gemäß **Figur 2** zum Einsatz kommen. Diese Schneideinrichtung **14** umfasst in dem gezeigten Beispiel einen lang gestreckten Zylinderkörper **15,** der anschließend an seine beiden sich gegenüberliegenden Randbereiche **18, 19** jeweils einen Lagerzapfen **22** aufweist. Mittels dieser Lagerzapfen **22** ist der Zylinderkörper **15** in einer zugehörigen Vorrichtung lagerbar und kann insbesondere angetrieben werden, sodass er um seine Längsachse **16** in eine Rotationsrichtung rotiert. Die Wendelform der Messer **1,** die auf einer äußeren Mantelfläche des Zylinderkörpers **15** angeordnet sind, ist derart ausgestaltet, dass sie sich um ihre Mittelachse **4** herum wendelförmig erstrecken. Die Mittelachse **4 mit** der Längsachse **16** des Zylinderkörpers **15** zusammen.

Die gezeigte Schneideinrichtung **14** wird dazu verwendet, Leder zu falzen. Bei diesem Bearbeitungsschritt einer Tierhaut wird eine Dicke derselben reduziert, das heißt Material der Tierhaut in einem bestimmten Umfang von selbiger abgetragen. Hierdurch soll insbesondere eine Vergleichmäßigung der Dicke der Tierhaut erfolgen. Es versteht sich, dass das abgetragene Material von der Tierhaut weggeführt werden muss. Die Wendelform der Messer **1** wirkt in diesem Zusammenhang gewissermaßen wie eine Schnecke, entlang derer das Material zu den seitlichen Endbereichen **18, 19** hin abgeführt wird. Um eine Strecke, die abgetragenes Material zurücklegen muss, zu minimieren, werden - wie im Stand der Technik üblich - gegenläufig gewendelte Messer **1** ausgehend von einem Mittelbereich **17** des Zylinderkörpers **15** zu den jeweiligen Endbereichen **18, 19** geführt. Auf diese Weise beträgt der Weg des abgetragenen Materials weg von dem Zylinderkörper **15** im Wesentlichen maximal die Hälfte einer gesamten Länge des Zylinderkörpers **15.** Die gegenläufig gewendelten Messer **1** stoßen an Stoßstellen **20** in dem Mittelbereich **17** aneinander. Dies ist in **Figur 2** besonders gut erkennbar.

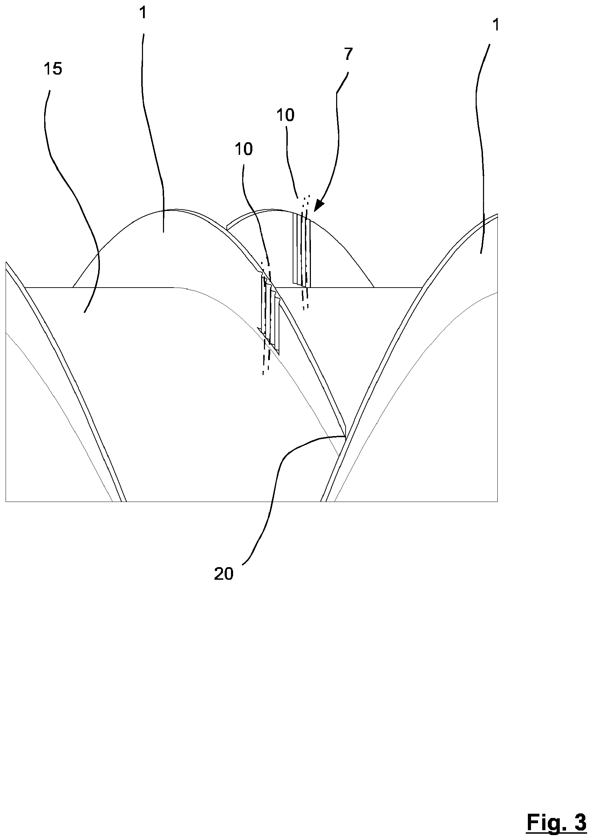

Erfindungsgemäß sind die Messer **1** jeweils mit einer Oberflächenstruktur **7** versehen, die in **Figur 2** exemplarisch lediglich teilweise dargestellt ist. Die Oberflächenstrukturen **7** der Messer **1** der Schneidvorrichtung **14** weisen erfindungsgemäß Berglinien **10** sowie Tallinien **11** auf, die bogenförmig ausgebildet sind. Wie sich besonders gut anhand von **Figur 3** ergibt, sind die Oberflächenstrukturen **7** der "linksseitigen" Messer **1** global, das heißt relativ zu der Schneidvorrichtung **14,** betrachtet in die gleiche Richtung gebogen wie denjenigen Oberflächenstrukturen **7,** die an den "rechtsseitigen" Messern **1** ausgebildet sind. Diese Ausgestaltung der Messer **1** führt zu einer Verstärkung des ziehenden Schnitts der Messer **1** durch den jeweils zu bearbeitenden Gegenstand und folglich zu einer Verbesserung der Schnittqualität.

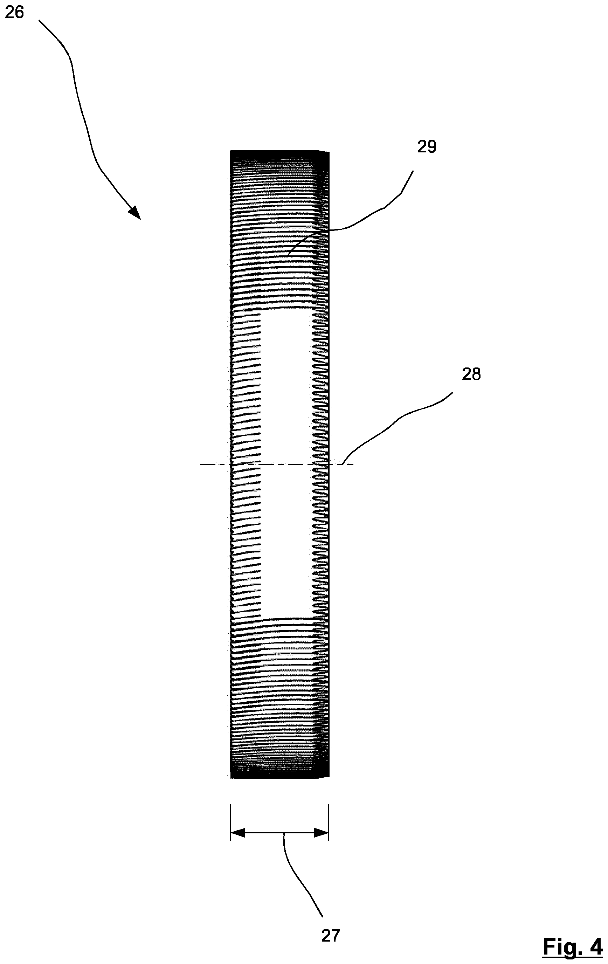

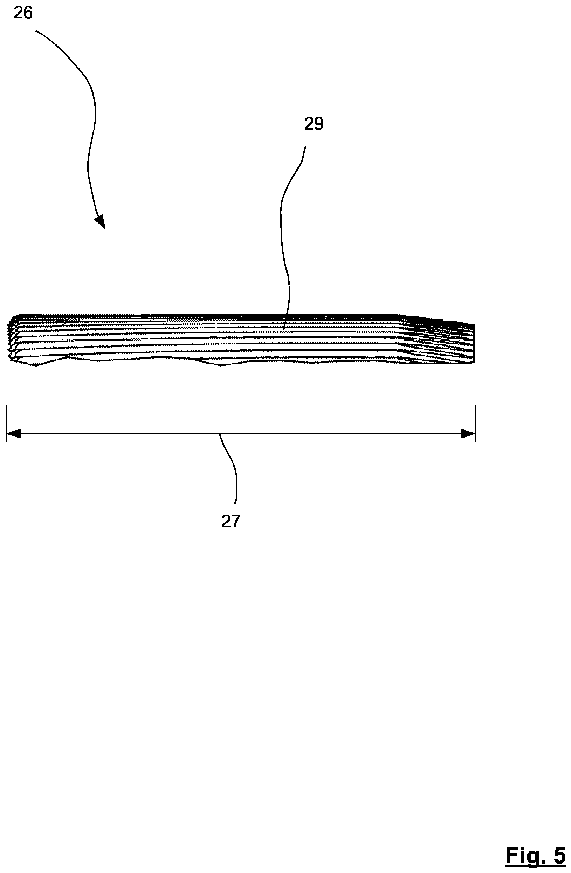

Die Einbringung der Oberflächenstrukturen **7** in die Messer **1** kann erfindungsgemäß besonders gut mittels einer Walzvorrichtung erfolgen, die über eine Walze **26** mit einer strukturierten Mantelfläche **29** verfügt. Eine solche Walze **26** ist besonders gut aus den **Figuren 4** **und** **5** zu der vorliegenden Anmeldung ersichtlich. Die Mantelfläche **29** weist eine regelmäßige Oberflächenstruktur auf, die gewissermaßen das Negativ zu der in dem zu bearbeitenden Messer **1** zu erzeugenden Oberflächenstruktur **7** bildet.

Das Messer **1,** das vor der Bearbeitung mittels der Walzvorrichtung in Form eines langgestreckten Flachstahls vorliegt, wird zur Bearbeitung in die Walzvorrichtung geführt, wobei die in den **Figuren 4** **und** **5** dargestellte Walze **26** gemeinsam mit einer nicht dargestellten zweiten Walze einen Walzspalt begrenzt. Dieser weist eine über eine Breite **27** der Walze **26** veränderliche Breite auf, wobei der Walzspalt zu dem in **Figur 5** links dargestellten Ende der Walze **26** hin zuläuft. Dies hat zur Folge, dass der Stahl des Messers **1** in diesem Bereich stärker verformt wird als an dem in **Figur 5** dargestellten rechten Ende der Walze **26.** Hierdurch wird der Flachstahl des Messers **1** in eine Ringform gezwungen. Gleichzeitig wird mittels der strukturierten Mantelfläche **29** der Walze **26** die gewünschte Oberflächenstruktur **7** erzeugt. Die andere, nicht dargestellte Walze des Walzenpaares der Walzvorrichtung weist eine glatte Mantelfläche auf. Auf diese Weise wird lediglich eine Seite des Messers **1** geprägt.

Es versteht sich, dass die vorstehend beschriebenen Merkmale jeweils auch unabhängig voneinander vorteilhaft wirken können und nicht zwingend auf die hier im Rahmen des Ausführungsbeispiels offenbarte Kombination angewiesen sind.

### Bezugszeichenliste

- 1: Messer
- 2: Messerschenkel
- 3: Längsachse des Messers
- 4: Mittelachse
- 5: Schneidabschnitt
- 6: Schneidkante
- 7: Oberflächenstruktur
- 8: Hochpunkt
- 9: Tiefpunkt
- 10: Berglinie
- 11: Tallinie
- 12: Strukturbereich
- 13: Höhe des Messerschenkels
- 14: Schneideinrichtung
- 15: Zylinderkörper
- 16: Längsachse der Schneideinrichtung
- 17: Mittelbereich
- 18: Endbereich
- 19: Endbereich
- 20: Stoßstelle
- 21: Höhe des Strukturbereichs
- 22: Lagerzapfen
- 23: Hochachse
- 24: oberes Ende der Berglinie
- 25: unteres Ende der Berglinie
- 26: Walze
- 27: Breite
- 28: Rotationsachse
- 29: Mantelfläche

## Patentansprüche

1. Messer (1), insbesondere Falzmesser zur Bearbeitung von Tierhäuten, umfassend
einen langgestreckten, flachen Messerschenkel (2), der entlang seiner Längsachse (3) wendelförmig um eine Mittelachse (4) ausgebildet ist, sodass die Längsachse (3) des Messers (1) wendelförmig verläuft,
wobei der Messerschenkel (2) an einem oberen, der Mittelachse (4) abgewandten Ende einen Schneidabschnitt (5) aufweist, der an seinem oberen Ende eine Schneidkante (6) umfasst,
wobei das Messer (1) zumindest in seinem Schneidabschnitt (5) eine gegenüber einem glatten Verlauf verlängerte Oberflächenstruktur (7) aufweist, die - entlang der Längsachse (3) des Messers (1) betrachtet - regelmäßig alternierend Hochpunkte (8) und Tiefpunkte (9) aufweist,
wobei sich Berglinien (10) und Tallinien (11), die mit den Hochpunkten (8) und Tiefpunkten (9) der Oberflächenstruktur (7) jeweils korrespondieren, ausgehend von der Schneidkante (6) in Richtung der Längsachse (3) des Messers (1) erstrecken,
**dadurch gekennzeichnet, dass**
die Berglinien (10) und Tallinien (11) in einer Bogenform in der Messerschenkelebene verlaufen.

2. Messer (1) nach Anspruch 1, **dadurch gekennzeichnet dass**
die Berglinien (10) und die Tallinien (11) jeweils über ihre Länge einen veränderlichen Radius aufweisen.

3. Messer (1) nach Anspruch 1 oder 2, **dadurch gekennzeichnet, dass**
die Radien der Berglinien (10) und Tallinien (11) sich über die Länge der letzteren kontinuierlich verändern.

4. Messer (1) nach einem der Ansprüche 1 bis 3, **dadurch gekennzeichnet, dass**
sich der Radius einer jeweiligen Berglinie (10) bzw. Tallinie (11) ausgehend von einem Anfangsradius an einem der Mittelachse (4) zugewandten Ende (25) der Berglinie (10) bzw. Tallinie (11) hin zu einem demgegenüber geringeren Endradius an einem der Mittelachse (4) abgewandten Ende (24) der Berglinie (10) bzw. Tallinie (11) verringert.

5. Messer (1) nach einem der Ansprüche 1 bis 4, **dadurch gekennzeichnet, dass**
die Oberflächenstruktur (7) wellenförmig oder zackenförmig ausgebildet ist.

6. Schneideinrichtung (14), insbesondere zum Falzen oder Entfleischen einer Tierhaut, umfassend
- mindestens einen langgestreckten Zylinderkörper (15), der um seine Längsachse (16) in eine Rotationsrichtung rotierbar gelagert ist,
sowie
- eine Mehrzahl von Messern (1) nach einem der Ansprüche 1 bis 5, deren Mittelachse (4) mit der Längsachse (16) des Zylinderkörpers (15) zusammenfällt.

7. Schneideinrichtung (14) nach Anspruch 6, **dadurch gekennzeichnet, dass**
die Messer (1) jeweils in einem äußeren Mantelbereich des Zylinderkörpers (15) in Kraft übertragender Weise an dem Zylinderkörper (15) angeordnet sind,
wobei mindestens zwei Messer (1) gegenläufig gewendelt an dem Zylinderkörper (15) angeordnet sind und in einem Mittelbereich (17) des Zylinderkörpers (15) aneinanderstoßen, sodass im Zuge einer Rotation des Zylinderkörpers (15) um dessen Längsachse (16) mittels des einen Messers (1) Material eines zu bearbeitenden Gegenstandes in Richtung eines seitlichen Endbereichs (18) des Zylinderkörpers (15) und mittels des anderen Messers (1) Material in Richtung des gegenüberliegenden seitlichen Endbereichs (19) des Zylinderkörpers (15) transportierbar ist,
wobei sich die Messer (1) jeweils ausgehend von einer Stoßstelle (20), an der sie an ein gegenläufig gewendeltes Messer (1) stoßen, bis in den jeweils zugehörigen seitlichen Endbereich (18, 19) des Zylinderkörpers (15) erstrecken.

8. Schneideinrichtung (14) nach Anspruch 6 oder 7, **dadurch gekennzeichnet, dass**
die Berglinien (10) und Tallinien (11) gegenläufig gewendelter Messer (1) - global betrachtet - gleichläufig gebogen sind.

9. Schneideinrichtung (14) nach einem der Ansprüche 6 bis 8, **dadurch gekennzeichnet, dass**
die Berglinien (10) und Tallinien (11) der gegenläufig gewendelten Messer (1) derart gebogen sind, dass die der Mittelachse (4) abgewandten Enden der Berglinien (10) und Tallinien (11) deren jeweils zugehörigen, der Mittelachse (4) zugewandten Enden in Rotationsrichtung des Zylinderkörpers (15) betrachtet nachlaufen.

10. Verfahren zur Herstellung eines Messers (1) nach einem der Ansprüche 1 bis 5, umfassend den folgenden Verfahrensschritt:
- Ein langgestreckter, flacher Messerschenkel (2) wird ausgehend von einem ebenen Zustand, in dem er vollflächig auf einen ebenen Untergrund auflegbar ist, unter Verwendung einer Walzvorrichtung gewalzt,
**dadurch gekennzeichnet, dass**
die Walzvorrichtung einen über zumindest einen Teil ihrer Breite (27) betrachtet zulaufenden Walzspalt aufweist, sodass der Messerschenkel (2) im Zuge des Walzens in einen ringförmigen Zustand überführt wird, in dem eine Längsachse (3) des Messerschenkels (2) ringförmig um eine Mittelachse (4) verläuft.

11. Verfahren nach Anspruch 10, **dadurch gekennzeichnet, dass**
mittels einer Walzvorrichtung der Messerschenkel (2) auf mindestens einer Seite zumindest in einem Strukturbereich (12) geprägt wird, sodass er eine gegenüber einem glatten Verlauf verlängerte Oberflächenstruktur (7) aufweist.

12. Verfahren nach Anspruch 10 oder 11, **dadurch gekennzeichnet, dass**
die Überführung des Messerschenkels (2) von seinem ebenen Zustand in einen ringförmigen Zustand und die Prägung der Oberflächenstruktur (7) in einem gemeinsamen Arbeitsgang, insbesondere mittels derselben Walzvorrichtung, vorgenommen werden.

13. Verfahren nach einem der Ansprüche 10 bis 12, **dadurch gekennzeichnet, dass**
zumindest die Walzvorrichtung mittels derer der Messerschenkel (2) geprägt wird, von einem Walzenpaar gebildet ist, wobei die Prägung mittels einer korrespondierend ausgebildeten Mantelfläche (29) einer der Walzen (26) des Walzenpaares vorgenommen wird.

## Claims

1. Blade (1), in particular shaving blade for processing hides, comprising
an elongated, flat blade leg (2) which is provided helically around a central axis (4) along its longitudinal axis (3), so that the longitudinal axis (3) of the blade (1) extends helical,
wherein the blade leg (2) provides a cutting portion (5) at an upper end facing away from the central axis (4) which comprises at its upper end a cutting edge (6),
wherein the blade (1) provides at least in its cutting portion (5) a surface structure (7) which is elongated with respect to a smooth surface path and which, when viewed along the longitudinal axis (3) of the blade (1), provides regularly alternating high points (8) and low points (9),
wherein mountain lines (10) and valley lines (11), which correspond respectively to the high points (8) and low points (9) of the surface structure (7), extend from the cutting edge (6) in direction to the longitudinal axis (3) of the blade (1),
**characterized in that**
the mountain lines (10) and valley lines (11) run in an arc shape in the blade leg plane.

2. Blade (1) according to claim 1, wherein
the mountain lines (10) and valley lines (11) each providing a variable radius over their length.

3. Blade (1) according to claim 1 or 2, wherein
the radii of the mountain lines (10) and valley lines (11) change continuously over the length of the latter.

4. Blade (1) according to one of the claims 1 to 3, wherein
the radius of a respective mountain line (10) or valley line (11) decreases starting from an initial radius at an end (25) of the mountain line (10) or valley line (11) facing the central axis (4) towards a smaller end radius at an end (24) of the mountain line (10) or valley line (11) facing away from the central axis (4).

5. Blade (1) according to one of the claims 1 to 4, wherein
the surface structure (7) is wave-shaped or serrated.

6. Cutting device (14), in particular for shaving or flashing of a hide, comprising
- at least one elongated cylinder body (15) which is rotatably mounted about its longitudinal axis (16) in a rotational direction, and
- a plurality of blades (1) according to one of the claims 1 to 5 whose central axis (4) coincides with the longitudinal axis (16) of the cylinder body (15).

7. Cutting device (14) according to claim 6, wherein
the blades (1) each being arranged on the cylinder body (15) in a force-transmitting manner in an outer lateral surface region of the cylinder body (15),
wherein at least two blades (1) are arranged on the cylinder body (15) in counter-rotating helically fashion and abut one another in a central region (17) of the cylinder body (15), so that in the course of a rotation of the cylinder body (15) about its longitudinal axis (16), material of an object to be machined is transportable in the direction of a lateral end region (18) of the cylinder body (15) by means of one blade (1) and material is transportable in the direction of the opposite lateral end region (19) of the cylinder body (15) by means of the other blade (1),
wherein the blades (1) each extending from an abutment (20), at which they abut against a blade (1) which is helically wound in an opposite direction, into the respectively associated lateral end region (18, 19) of the cylinder body (15).

8. Cutting device (14) according to claim 6 or 7, wherein
the mountain lines (10) and valley lines (11) of counter-rotating helically wound blades (1), when viewed globally, are curved in the same direction.

9. Cutting device (14) according to one of the claims 6 to 8, wherein
the mountain lines (10) and valley lines (11) of the counter-rotating helically wound blades (1) being bent in such a way that the ends of the mountain lines (10) and valley lines (11) facing away from the central axis (4) follow their respective associated ends facing the central axis (4) as viewed in the direction of rotation of the cylinder body (15).

10. Method for manufacturing a blade (1) according to one of the claims 1 to 5, comprising the following method step:
- An elongated, flat blade leg (2) is rolled using a rolling device, starting from a flat condition in which it can be placed over its entire surface on a flat substrate,
**characterized in that**
the rolling device provides a rolling gap which, when viewed over at least part of its width (27), converges, so that the blade leg (2) is transferred into an annular state in which a longitudinal axis (3) of the blade leg (2) extends annularly about a central axis (4) in the course of rolling.

11. Method according to claim 10, wherein
the blade leg (2) is embossed on at least one side in at least one structural region (12) by means of a rolling device, so that it has a surface structure (7) which is elongated with respect to a smooth surface path.

12. Method according to claim 10 or 11, wherein
the blade leg (2) is transferred from its flat state to an annular state and the surface structure (7) is embossed in a common operation, in particular by means of the same rolling device.

13. Method according to one of the claims 10 to 12, wherein
at least the rolling device by means of which the blade legs (2) are embossed is provided by a pair of rollers, wherein the embossing is carried out by means of a correspondingly formed outer surface (29) of one of the rollers (26) of the pair of rollers.

## Revendications

1. Lame (1), en particulier lame à drayer pour le traitement de peaux animales, comprenant
une branche de lame (2) plate et allongée, qui est formée le long de son axe longitudinal (3) de manière hélicoïdale autour d'un axe médian (4), de telle sorte que l'axe longitudinal (3) de la lame (1) s'étend de manière hélicoïdale,
dans laquelle la branche de lame (2) présente à une extrémité supérieure opposée à l'axe médian (4) une partie de coupe (5) qui comprend une arête de coupe (6) à son extrémité supérieure,
dans laquelle la lame (1) présente au moins dans sa partie de coupe (5) une structure de surface (7) prolongée par rapport à un tracé lisse, laquelle structure présente lorsqu'elle est observée le long de l'axe longitudinal (3) de la lame (1) des points hauts (8) et des points bas (9) en alternance régulière,
dans laquelle des lignes de crête (10) et des lignes de creux (11), qui correspondent respectivement aux points hauts (8) et aux points bas (9) de la structure de surface (7), s'étendent à partir de l'arête de coupe (6) en direction de l'axe longitudinal (3) de la lame (1),
**caractérisée en ce que**
les lignes de crête (10) et les lignes de creux (11) s'étendent en forme d'arc dans le plan de la branche de lame.

2. Lame (1) selon la revendication 1, **caractérisé en ce que**
les lignes de crête (10) et les lignes de creux (11) présentent chacune un rayon variable sur toute leur longueur.

3. Lame (1) selon la revendication 1 ou 2, **caractérisé en ce que**
les rayons des lignes de crête (10) et des lignes de creux (11) varient de manière continue sur toute la longueur de ces dernières.

4. Lame (1) selon l'une quelconque des revendications 1 à 3, **caractérisée en ce que**
le rayon d'une ligne de crête (10) ou d'une ligne de creux (11) respective diminue d'un rayon initial, à une extrémité (25) de la ligne de crête (10) ou de la ligne de creux (11) tournée vers l'axe médian (4), en direction d'un rayon final plus petit que celui du rayon initial, à une extrémité (24), opposée à l'axe médian (4), de la ligne de crête (10) ou de la ligne de creux (11).

5. Lame (1) selon l'une quelconque des revendications 1 à 4, **caractérisée en ce que**
la structure de surface (7) est ondulée ou dentelée.

6. Dispositif de coupe (14), destiné en particulier à drayer ou à écharner une peau animale, comprenant
- au moins un corps cylindrique (15) allongé, qui est monté de manière à pouvoir tourner autour de son axe longitudinal (16) dans un sens de rotation,
ainsi que
- une pluralité de lames (1) selon l'une quelconque des revendications 1 à 5, dont l'axe médian (4) coïncide avec l'axe longitudinal (16) du corps cylindrique (15).

7. Dispositif de coupe (14) selon la revendication 6, **caractérisé en ce que**
les lames (1) sont agencées chacune sur le corps cylindrique (15) dans une zone d'enveloppe extérieure du corps cylindrique (15) de manière à transmettre une force,
dans lequel au moins deux lames (1) sont agencées sur le corps cylindrique (15) en étant spiralées en sens inverse et sont mises bout-à-bout dans une zone centrale (17) du corps cylindrique (15), de telle sorte qu'au cours d'une rotation du corps cylindrique (15) autour de l'axe longitudinal (16) de celui-ci, la matière d'un article à traiter peut être transportée au moyen d'une des lames (1) en direction d'une zone d'extrémité latérale (18) du corps cylindrique (15) et au moyen de l'autre lame (1) en direction de la zone d'extrémité latérale (19) opposée du corps cylindrique (15),
dans lequel les lames (1) s'étendent chacune à partir d'un point de jonction (20), au niveau duquel elles sont mises bout-à-bout avec une lame (1) spiralée dans le sens inverse, jusque dans la zone d'extrémité latérale (18, 19) respectivement associée du corps cylindrique (15).

8. Dispositif de coupe (14) selon la revendication 6 ou 7, **caractérisé en ce que**
les lignes de crête (10) et les lignes de creux (11) des lames (1) spiralées dans le sens inverse -lorsqu'elles sont observées dans leur globalité sont courbées dans le même sens.

9. Dispositif de coupe (14) selon l'une quelconque des revendications 6 à 8, **caractérisé en ce que**
les lignes de crête (10) et les lignes de creux (11) des lames (1) spiralées dans le sens inverse sont courbées de telle sorte que les extrémités, opposées à l'axe médian (4), des lignes de crête (10) et des lignes de creux (11) poursuivent les extrémités respectivement associées, tournées vers l'axe médian (4), desdites lignes lorsqu'elles sont observées dans le sens de rotation du corps cylindrique (15).

10. Procédé pour fabriquer une lame (1) selon l'une quelconque des revendications 1 à 5,
comprenant l'étape de procédé suivante :
- une branche de lame plate et allongée (2) est laminée au moyen d'un dispositif de laminage à partir d'un état plan dans lequel elle peut être posée sur toute sa surface sur un support plan,
**caractérisé en ce que**
le dispositif de laminage présente une emprise progressivement rétrécie lorsqu'elle est observée sur au moins une partie de sa largeur (27), de sorte que la branche de lame (2) est amenée au cours du laminage dans un état annulaire dans lequel un axe longitudinal (3) de la branche de lame (2) s'étend de manière annulaire autour d'un axe médian (4).

11. Procédé selon la revendication 10, **caractérisé en ce que**
la branche de lame (2) est estampée sur au moins un côté au moins dans une zone structurale (12) au moyen d'un dispositif de laminage, de sorte qu'elle présente une structure de surface (7) prolongée par rapport à un tracé lisse.

12. Procédé selon la revendication 10 ou 11, **caractérisé en ce que**
le passage de la branche de lame (2) de son état plan dans un état annulaire et l'estampage de la structure de surface (7) sont réalisés au cours d'une opération commune, en particulier au moyen du même dispositif de laminage.

13. Procédé selon l'une quelconque des revendications 10 à 12, **caractérisé en ce que**
au moins le dispositif de laminage, au moyen duquel la branche de lame (2) est estampée, est formé par une paire de rouleaux, dans lequel l'estampage est réalisé au moyen d'une surface d'enveloppe (29), formée de manière correspondante, d'un des rouleaux (26) de la paire de rouleaux.
